(19) Europäisches Patentamt

European Patent Office

Office européen des brevets

(11) **EP 1 051 531 B1**

(12) **FASCICULE DE BREVET EUROPEEN**

(45) Date de publication et mention
de la délivrance du brevet:
**29.08.2001 Bulletin 2001/35**

(51) Int Cl.[7]: **C22C 38/12**, C22C 38/00

(21) Numéro de dépôt: **99900948.3**

(86) Numéro de dépôt international:
**PCT/FR99/00089**

(22) Date de dépôt: **19.01.1999**

(87) Numéro de publication internationale:
**WO 99/39018 (05.08.1999 Gazette 1999/31)**

(54) **ACIER ET PROCEDE POUR LA FABRICATION DE PIECES DE MECANIQUE SECABLES**

STAHL UND VERFAHREN ZUR HERSTELLUNG VON TEILBAREN MASCHINENTEILEN

STEEL AND METHOD FOR MAKING CLEAVABLE MECHANICAL PARTS

(84) Etats contractants désignés:
**AT BE CH DE DK ES FI FR GB GR IE IT LI LU MC NL PT SE**

(30) Priorité: **28.01.1998 FR 9800860**

(43) Date de publication de la demande:
**15.11.2000 Bulletin 2000/46**

(73) Titulaire: **Ascometal**
**92800 Puteaux (FR)**

(72) Inventeurs:
- **BELLUS, Jacques**
  **F-30900 Nîmes (FR)**
- **DIERICKX, Pierre**
  **F-57000 Metz (FR)**
- **JACOT, Vincent**
  **F-57111 Amanvillers (FR)**
- **ROBELET, Marc**
  **F-57190 Florange (FR)**

(74) Mandataire: **Neyret, Daniel et al**
**c/o Cabinet Lavoix,**
**2, Place d'Estienne d'Orves**
**75441 Paris Cedex 09 (FR)**

(56) Documents cités:
EP-A- 0 674 014     FR-A- 2 742 448
US-A- 3 173 782     US-A- 5 100 613
US-A- 5 135 587

- **PATENT ABSTRACTS OF JAPAN vol. 95, no. 007, 31 août 1995 & JP 07 102340 A (NIPPON STEEL CORP.), 18 avril 1995**
- **PATENT ABSTRACTS OF JAPAN vol. 13, no. 457 (C-644), 16 octobre 1989 & JP 01 176055 A (KAWASAKI STEEL CORP.), 12 juillet 1989**
- **PATENT ABSTRACTS OF JAPAN vol. 16, no. 400 (C-977), 25 août 1992 & JP 04 131323 A (KOBE STEEL LTD.), 6 mai 1992**

## Description

La présente invention concerne un acier pour la fabrication d'une pièce de mécanique sécable, et notamment pour la fabrication d'une bielle pour moteur à combustion interne.

Certaines pièces de mécanique telles que, par exemple, les bielles de moteur à combustion interne sont constituées d'au moins deux éléments séparables assemblés par des moyens de fixation tels que des vis. Ces pièces peuvent être en fonte, en poudre métallique frittée et forgée, ou en acier forgé. L'invention concerne les pièces, et notamment les bielles, en acier forgé.

L'acier qui constitue les bielles en acier forgé doit être forgeable, usinable facilement, présenter des caractéristiques mécaniques permettant d'assurer une bonne tenue en service des bielles. Les caractéristiques mécaniques généralement requises sont une dureté comprise entre 210 HB et 360 HB et une résistance à la rupture comprise entre 650 MPa et 1200 MPa pour obtenir une tenue à la fatigue suffisante, et une limite d'élasticité comprise entre 300 MPa et 800 MPa afin d'éviter les déformations par dépassement de la limite d'élasticité. Pour certaines bielles, la limite d'élasticité Re doit être supérieure à 700 MPa, et la résistance à la traction doit être inférieure à 1100 MPa.

Les bielles qui comportent deux parties séparées, un corps et un chapeau, peuvent être fabriquées par forgeage d'une ébauche. L'ébauche est ensuite usinée puis séparée en deux parties par rupture fragile selon un plan prédéterminé. Cette technique, dite des pièces sécables, présente plusieurs avantages et, notamment, celui de simplifier considérablement la gamme de fabrication en supprimant des opérations d'usinage. En revanche, elle exige l'utilisation d'un acier « sécable », c'est à dire permettant d'effectuer l'opération de rupture fragile dans de bonnes conditions.

Pour fabriquer des bielles sécables, on a proposé dans la demande de brevet japonais JP 8-291373, d'utiliser un acier contenant de 0,4 % à 0,6 % de carbone, de 0,5 % à 5 % de silicium, de 0,1 % à 0,8 % de manganèse, de 0,1 % à 0,5 % de chrome, de 0,1 % à 0,5 % de vanadium, de 0,01 % à 0,2 %, et de préférence plus de 0,05 %, de phosphore, le reste étant du fer, des impuretés et éventuellement de petites additions destinées à améliorer l'usinabilité. Cet acier présente cependant l'inconvénient d'avoir une structure presque totalement perlitique ce qui limite la fraction en ferrite et donc l'effet de durcissement par précipitation de carbonitrures, ainsi que la fragilisation de celle-ci. De plus, pour ces aciers, les caractéristiques de traction (Re et Rm) sont très sensibles aux conditions de refroidissement, ce qui diminue la fiabilité de la fabrication en série de pièces.

On a également proposé dans la demande de brevet français FR 2 742 448 d'utiliser un acier contenant de 0,25 % à 0,5 % de carbone, de 0,2 % à 1,5 % de silicium, de 0,1 % à 2 % de manganèse, moins de 0,15 % de chrome, moins de 0,15 % de nickel, moins de 0,05 % de molybdène, moins de 0,35 % de cuivre, de 0 % à 0,2 % de vanadium, de 0,04 % à 0,2 % de phosphore, de 0,005 % à 0,02 % d'azote, le reste étant du fer, des impuretés et éventuellement de petites additions destinées à améliorer l'usinabilité. Cet acier permet d'obtenir une structure ferrito- perlitique facilement sécable. En revanche, il ne permet pas d'obtenir à la fois une limite d'élasticité supérieure à 700 MPa et une résistance à la traction inférieure à 1100 MPa. De plus, la sécabilité ne peut être obtenue qu'avec une addition importante de phosphore, ce qui présente l'inconvénient d'accroître les risques de ségrégation rendant l'usinage difficile.

Le but de la présente invention est de remédier à ces inconvénients en proposant un moyen pour fabriquer des pièces forgées sécables dont la limite d'élasticité soit supérieure à 700 MPa et la résistance à la traction inférieure à 1100 MPa, ayant une bonne usinabilité, et pour lesquelles on peut réaliser une opération de rupture fragile dans des conditions industrielles satisfaisantes.

A cet effet, l'invention a pour objet un acier pour la fabrication d'une pièce de mécanique sécable dont la composition chimique comprend, en poids:

$$0,2 \% \leq C \leq 0,4 \%$$

$$0,1 \% \leq Si \leq 1,5 \%$$

$$0,3 \% \leq Mn \leq 1,4 \%$$

$$0,2\% \leq V \leq 0,5\%$$

$$P \leq 0,150\%$$

$$0,005\% \leq N \leq 0,02\%$$

- éventuellement un ou plusieurs éléments pris parmi le plomb jusqu'à 0,1 %, le tellure jusqu'à 0,15 %, le bismuth jusqu'à 0,15 %, le sélénium jusqu'à 0,02 %, le soufre jusqu'à 0,35 %, et le calcium jusqu'à 0,005 %,
- éventuellement au moins un élément pris parmi le titane jusqu'à 0,05 %, le niobium jusqu'à 0,1 %, et l'aluminium jusqu'à 0,07 %,

le reste étant du fer et des impuretés et des résiduels résultant de l'élaboration ; l'acier ayant une structure essentiellement ferrito-perlitique dont la fraction ferritique est d'au moins 20 %, la résistance à la traction étant inférieure à 1100 MPa, la limite d'élasticité étant supérieure à 700 MPa, le rapport Re/Rm étant supérieur à 0,73 et la résilience Kcv étant inférieure à 7 Joules/cm². 

De préférence, la teneur en phosphore est inférieure à 0,03 %. De préférence également, les résiduels que sont le nickel, le chrome et le molybdène sont tels que :

$$Ni + Cr \leq 0,45 \%$$

$$Mo \leq 0,06 \%$$

L'invention concerne également une pièce en cet acier dont la structure est essentiellement ferrito-perlitique, la fraction ferritique étant d'au moins 20 %, dont la résistance à la traction est inférieure à 1100 MPa, la limite d'élasticité est supérieure à 700 MPa, le rapport Re/Rm est supérieur à 0,73 et la résilience Kcv est inférieure à 7 Joules/cm². Cette pièce qui peut être une bielle, est sécable.

L'invention concerne, enfin, un procédé pour la fabrication d'une pièce en acier comportant au moins deux parties séparées selon lequel :

- on chauffe un lopin en acier ayant la composition de l'acier selon l'invention à une température comprise entre Ac$_3$ + 150 °C et 1370 °C,
- on forge le lopin afin d'obtenir une ébauche de pièce,
- après forgeage, on refroidit l'ébauche de pièce jusqu'à la température ambiante à une vitesse comprise entre 0,4 °C/s et 1,5 °C/s au moment du passage à 700 °C de façon à obtenir une structure essentiellement ferrito-perlitique dont la fraction ferritique est d'au moins 20 %, une résistance à la traction inférieure à 1100 MPa, une limite d'élasticité supérieure à 700 MPa, un rapport Re/Rm supérieur à 0,73 et une résilience Kcv inférieure à 7 Joules/cm²,
- on effectue un ou plusieurs usinages de l'ébauche de pièce,
- et on sépare la pièce obtenue en au moins deux parties par rupture fragile.

L'invention va maintenant être décrite de façon plus précise mais non limitative.

L'acier selon l'invention est un acier de construction mécanique au carbone ou faiblement allié dont la composition chimique comprend, en poids:

- plus de 0,2% de carbone, et de préférence plus de 0,21 %, pour obtenir une résistance mécanique suffisante, mais moins de 0,4% de façon à éviter d'avoir une trop grande sensibilité des caractéristiques mécaniques aux conditions de refroidissement, et pour éviter également d'avoir une dureté trop grande rendant l'usinage difficile ;
- de 0,1% à 1,5% de silicium; le silicium est un élément désoxydant qui doit être ajouté en des teneurs supérieures à 0,1% pour assurer une bonne désoxydation ; en des teneurs inférieures à 1,5 %, et de préférence comprises entre 0,6 % et 1,2%, cet élément durcit et fragilise la ferrite ce qui est favorable à une bonne usinabilité et à une bonne aptitude à la rupture fragile ;
- de 0,3% à 1,4% de manganèse afin de fixer le soufre sous forme de sulfures de manganèse et pour ajuster la trempabilité afin d'obtenir une structure essentiellement ferrito-perlitique contenant au moins 30 % de ferrite, ce qui est favorable à l'usinabilité ; de préférence, la structure contient au moins 90 % de ferrite-perlite ;
- de 0,2 % à 0,4 % de vanadium, et de préférence plus de 0,21 %, pour durcir la ferrite, obtenir une limite d'élasticité supérieure à 700 MPa et un rapport limite d'élasticité sur résistance à la rupture supérieur à 0,75, ce qui est favorable à une bonne aptitude à la rupture fragile ;
- jusqu'à 0,2% de phosphore, mais de préférence moins de 0,03 %; une forte teneur en phosphore est favorable à une bonne aptitude à la rupture fragile, cependant, il est préférable de limiter sa teneur à 0,03 % pour limiter les ségrégations défavorables à l'aptitude à l'usinage ;
- de 0,005 % à 0,02 % d'azote pour former des nitrures de vanadium durcissant la ferrite.
- éventuellement un ou plusieurs éléments pris parmi le plomb jusqu'à 0,1 %, le tellure jusqu'à 0,15 %, le bismuth jusqu'à 0,15 %, le sélénium jusqu'à 0,02 %, le soufre jusqu'à 0,35 %, et le calcium jusqu'à 0,005 %, afin d'améliorer l'usinabilité ;
- éventuellement au moins un élément pris parmi le titane jusqu'à 0,05 %, le niobium jusqu'à 0,1 %, et l'aluminium jusqu'à 0,07 %, pour limiter le grossissement du grain lors du forgeage.

Le reste de la composition est constitué de fer, d'impuretés et de résiduels résultant de l'élaboration. Les résiduels apportés par les matières premières sont notamment le nickel, le chrome et le molybdène. Afin d'obtenir une structure essentiellement ferrito-perlitique contenant au moins 20 %, et de préférence plus de 30 %, de ferrite, les teneurs en résiduels doivent, de préférence, être contrôlées pour que la somme des teneurs Ni + Cr reste inférieure à 0,45 %, et pour que la teneur en molybdène reste inférieure à 0,05 %.

De plus, afin de bien contrôler la structure, il est préférable que les teneurs en manganèse et en vanadium soient telles que Mn + 10 x V ≤ 5,2 %

Pour fabriquer une pièce sécable, on chauffe un lopin d'acier ayant la composition selon l'invention à une température comprise entre Ac$_3$ + 150°C et 1370°C de façon à austénitiser et mettre en solution le vanadium, puis on le forge à chaud pour obtenir une ébauche de pièce, le forgeage se terminant à une température supérieure à 800°C. Directement après forgeage, l'ébauche de pièce est refroidie de façon contrôlée jusqu'à la température ambiante, par exemple à l'air, à une vitesse de refroidissement comprise entre 0,5°C/s et 1,5°C/s au passage à 700 °C. En procédant ainsi, on obtient une structure essentiellement ferrito-perlitique (c'est à dire, au moins à 90 % ferrito-perlitique) comportant au moins 20 %, et de préférence plus de 30 %, de ferrite, dont la limite d'élasticité Re est supérieure à 700 MPa et la résistance à la traction Rm est inférieure à 1100 Mpa et de préférence supérieure à 850 MPa. De plus, la résilience Kcv inférieure à 7 Joules/cm$^2$ à la température ambiante et le rapport Re/Rm est supérieur à 0,73, et de préférence supérieur à 0,75. Ces deux dernières conditions permettent d'obtenir des cassures franches dont les lèvres ne sont pas déformées, ce qui définit la bonne sécabilité. L'ébauche de pièce ainsi obtenue, est alors usinée, puis divisée en deux éléments par rupture fragile.

A titre de premier exemple, on a fabriqué des bielles en utilisant un acier conforme à l'invention dont la composition chimique comprenait, en poids:

C = 0,319 %

Si = 0,61 %

Mn = 1,02 %

V = 0,3 %

Ni = 0,214 %

Cr = 0,21 %

Mo = 0,05 %

Cu = 0,21 %

S = 0,059 %

P = 0,017 %

Al = 0,02 %

N = 0,0085 %

le reste étant du fer et des impuretés résultant de l'élaboration.

Avant forgeage, les lopins d'acier a été chauffé à 1270°C; la température de fin de forgeage a été de 1005°C. Après forgeage, l'ébauche a été refroidie à l'air à des vitesses de refroidissement moyenne à 700 °C de 0,9°C/s. Les caractéristiques obtenues ont été:

structure: ferrito-perlitique à 98 % avec 60% de ferrite,
Rm = 1050 MPa,
Re = 840 MPa,
A% = 14,5 %
Kcv = 4 Joules/cm$^2$ à la température ambiante.

Les ébauches ont alors été usinées puis toutes séparées en deux éléments par rupture fragile. Cette séparation par rupture fragile s'est faite sans difficultés.

A titre de deuxième exemple, on a fabriqué des bielles en utilisant un acier selon l'invention dont la composition chimique comprenait, en poids:

C = 0,208 %

Si = 0,605 %

Mn = 1,02 %

V = 0,3 %

Ni = 0,212 %

Cr = 0,211 %

Mo = 0,05 %

Cu = 0,205 %

S = 0,059 %

P = 0,016 %

Al = 0,022 %

N = 0,0077 %

le reste étant du fer et des impuretés résultant de l'élaboration.

Avant forgeage, le lopin d'acier a été chauffé à 1270°C; la température de fin de forgeage a été de 1025°C. Après forgeage, l'ébauche a été refroidie à l'air à des vitesses de refroidissement moyenne à 700 °C de 0,9°C/s. Les caractéristiques obtenues ont été:

structure: ferrito-perlitique à 98 % avec 60% de ferrite,
Rm = 950 MPa,
Re = 740 MPa,
A% =17 %
Kcv = 5 Joules/cm$^2$ à la température ambiante.

Les ébauches ont alors été usinées puis toutes séparées en deux éléments par rupture fragile. Cette séparation par rupture fragile s'est faite sans difficultés.

**Revendications**

1. Acier pour la fabrication d'une pièce de mécanique sécable dont la composition chimique comprend, en poids:

$$0,2 \% \leq C \leq 0,4 \%$$

$$0,1 \% \leq Si \leq 1,5 \%$$

$$0,3 \% \leq Mn \leq 1,4 \%$$

$$0,2 \% \leq V \leq 0,5 \%$$

$$P \leq 0,150\%$$

$$0,005\% \leq N \leq 0,02\%$$

- éventuellement un ou plusieurs éléments pris parmi le plomb jusqu'à 0,1 %, le tellure jusqu'à 0,15 %, le bismuth jusqu'à 0,15 %, le sélénium jusqu'à 0,02 %, le soufre jusqu'à 0,35 %, et le calcium jusqu'à 0,005 %,
- éventuellement au moins un élément pris parmi le titane jusqu'à 0,05 %, le niobium jusqu'à 0,1 %, et l'aluminium jusqu'à 0,07 %, le reste étant du fer et des impuretés et des résiduels résultant de l'élaboration, l'acier ayant une structure essentiellement ferrito-perlitique, la fraction ferritique étant d'au moins 20 %, la résistance à la traction de l'acier étant inférieure à 1100 MPa, la limite d'élasticité étant supérieure à 700 MPa, le rapport Re/Rm étant supérieur à 0,73 et la résilience Kcv étant inférieure à 7 Joules/cm$^2$.

2. Acier selon la revendication 1 **caractérisé en ce que** sa composition chimique est telle que:

$$P \leq 0,03\%$$

3. Acier selon la revendication 1 **caractérisé en ce que** les résiduels que sont le nickel, le chrome et le molybdène ont des teneurs telles que :

$$Ni + Cr \leq 0,45 \%$$

$$Mo \leq 0,06 \%$$

4. Acier selon les revendications 1, 2 ou 3, **caractérisé en ce que** la fraction ferritique est d'au moins 30 %.

5. Acier selon les revendications 1, 2, 3 ou 4, **caractérisé en ce que** le rapport Re/Rm est supérieur à 0,75.

6. Acier selon l'une quelconque des revendications 1 à 5 **caractérisé en ce que** la résistance à la tractions Rm est supérieure ou égale à 850 MPa.

7. Pièce en acier selon l'une quelconque des revendications 1 à 6.

8. Pièce selon la revendication 7 **caractérisée en ce qu'**elle est une bielle.

9. Procédé pour la fabrication d'une pièce en acier comportant au moins deux parties séparées, selon lequel :

- on chauffe à une température comprise entre Ac$_3$ + 150 °C et 1370 °C un lopin en acier dont la composition chimique comprend, en poids:

$$0,2 \% \leq C \leq 0,4 \%$$

$$0,1 \% \leq Si \leq 1,5\%$$

$$0,3 \% \leq Mn \leq 1,4 \%$$

$$0,2 \% \leq V \leq 0,5 \%$$

$$P \leq 0,150\%$$

$$0,005\% \leq N \leq 0,02\%$$

et éventuellement un ou plusieurs éléments pris parmi le plomb jusqu'à 0,1 %, le tellure jusqu'à 0,15 %, le bismuth jusqu'à 0,15 %, le sélénium jusqu'à 0,02 %, le soufre jusqu'à 0,35 %, et le calcium jusqu'à 0,005 %, éventuellement au moins un élément pris parmi le titane jusqu'à 0,05 %, le niobium jusqu'à 0,1 %, et l'aluminium jusqu'à 0,07 %, le reste étant du fer et des impuretés et des résiduels résultant de l'élaboration,

- on forge le lopin afin d'obtenir une ébauche de pièce,
- après forgeage, on refroidit l'ébauche de pièce jusqu'à la température ambiante à une vitesse comprise entre 0,4 °C/s et 1,5 °C/s au moment du passage à 700 °C, de façon à obtenir une structure essentiellement ferrito-perlitique dont la fraction ferritique est d'au moins 20 %, une résistance à la traction inférieure à 1100 MPa, une limite d'élasticité supérieure à 700 MPa, un rapport Re/Rm supérieur à 0,73 et une résilience Kcv inférieure à 7 Joules/cm$^2$,
- on effectue un ou plusieurs usinages de l'ébauche de pièce,
- et on sépare la pièce obtenue en au moins deux parties par rupture fragile.

**Patentansprüche**

1. Stahl zur Herstellung eines teilbaren Maschinenteils, dessen chemische Zusammensetzung in Masse-% aufweist:

$$0,2\% \leq C \leq 0,4\%$$

$$0,1\% \leq Si \leq 1,5\%$$

$$0,3\% \leq Mn \leq 1,4\%$$

$$0,2\% \leq V \leq 0,5\%$$

$$P \leq 0,150\%$$

$$0,005\% \leq N \leq 0,02\%$$

- eventuell ein oder mehrere Elemente aus bis zu 0,1% Blei, bis zu 0,15% Tellur, bis zu 0,15% Wismut, bis zu 0,02% Selen, bis zu 0,35% Schwefel und bis zu 0,005% Calcium,
- eventuell wenigstens ein Element aus bis zu 0,05% Titan, bis zu 0,1% Niob und bis zu 0,07% Aluminium,

wobei der Rest aus Eisen und erschmelzungsbedingten Verunreinigungen und Reststoffen besteht, wobei der Stahl eine im wesentlichen ferritisch-perlitische Struktur aufweist, wobei die Ferritfraktion wenigstens 20% beträgt, wobei die Zugfestigkeit des Stahls unterhalb 1100 MPa liegt, wobei die Dehngrenze oberhalb 700 MPa liegt, wobei das Verhältnis Re/Rm größer als 0,73 ist, und wobei die Elastizität Kcv weniger als 7 Joules/cm$^2$ beträgt.

2. Stahl gemäß Anspruch 1, **dadurch gekennzeichnet**, daß seine chemische Zusammensetzung aufweist:

$$P \leq 0,03 \%.$$

3. Stahl gemäß Anspruch 1, **dadurch gekennzeichnet**, daß die Reststoffe, welche aus Nickel, Chrom und Molybdän bestehen, die folgenden Gehalte aufweisen:

$$Ni + Cr \leq 0,45 \%$$

$$Mo \leq 0,06 \%.$$

4. Stahl gemäß den Ansprüchen 1, 2 oder 3, **dadurch gekennzeichnet**, daß die Ferritfraktion wenigstens 30% beträgt.

5. Stahl gemäß den Ansprüchen 1, 2, 3 oder 4, **dadurch gekennzeichnet**, daß das Verhältnis Re/Rm größer als 0,75 ist.

6. Stahl gemäß irgendeinem der Ansprache 1 bis 5, **dadurch gekennzeichnet**, daß die Zugfestigkeit Rm größer oder gleich 850 MPa ist.

7. Maschinenteil aus Stahl gemäß irgendeinem der Ansprüche 1 bis 6.

8. Maschinenteil gemäß Anspruch 7, **dadurch gekennzeichnet**, daß es eine Pleuelstange ist.

9. Verfahren zur Herstellung eines Maschinenteils aus Stahl mit wenigstens zwei getrennten Teilen, gemäß welchem:

- ein Schmiederohling aus Stahl, dessen chemische Zusammensetzung in Masse-% aufweist:

$$0,2\% \leq C \leq 0,4\%$$

$$0,1\% \leq Si \leq 1,5\%$$

$$0,3\% \leq Mn \leq 1,4\%$$

$$0,2\% \leq V \leq 0,5\%$$

$$P \leq 0,150\%$$

$$0,005\% \leq N \leq 0,02\%$$

und eventuell ein oder mehrere Elemente aus bis zu 0,1% Blei, bis zu 0,15% Tellur, bis zu 0,15% Wismut, bis zu 0,02% Selen, bis zu 0,35% Schwefel und bis zu 0,005% Calcium, eventuell wenigstens ein Element aus bis zu 0,05% Titan, bis zu 0,1% Niob und bis zu 0,07% Aluminium, wobei der Rest aus Eisen und erschmelzungsbedingten Verunreinigungen und Reststoffen besteht,
auf eine Temperatur zwischen Ac$_3$ + 150°C und 1370°C erhitzt wird,
- der Schmiederohling geschmiedet wird, um einen Rohling für das Maschinenteil zu erhalten,
- nach dem Schmieden der Maschinenteilrohling auf Umgebungstemperatur mit einer Geschwindigkeit zwischen 0,4°C/Sek. und 1,5°C/Sek. in dem Augenblick des Erreichens von 700°C derart abgekuhlt wird, daß eine im wesentlichen ferritisch-perlitische Struktur, deren Ferritfraktion wenigstens 20% beträgt, eine Zugfestigkeit unterhalb 1100 MPa, eine Dehngrenze oberhalb 700 MPa, ein Verhältnis Re/Rm von größer als 0,73 und eine Elastizität Kcv von weniger als 7 Joules/cm$^2$ erhalten wird,
- ein oder mehrere Bearbeitungsvorgange an dem Rohling für das Maschinenteil durchgeführt werden,
- und das erhaltene Maschinenteil in wenigstens zwei Teile durch Trennbruch geteilt wird.

**Claims**

1. Steel for the manufacture of a cleavable mechanical part, the chemical composition of which steel comprises, by weight:

$$0,2\% \leq C \leq 0.4\%$$

$$0.1\% \leq Si \leq 1.5\%$$

$$0.3\% \leq Mn \leq 1.4\%$$

$$0.2\% \leq V \leq 0.5\%$$

$$P \leq 0.150\%$$

$$0.005\% \leq N \leq 0.02\%$$

- optionally one or more elements selected from lead up to 0.1%, tellurium up to 0.15%, bismuth up to 0.15%, selenium up to 0.02%, sulphur up to 0.35% and calcium up to 0.005%,
- optionally at least one element selected from titanium up to 0.05%, niobium up to 0.1% and aluminium up to 0.07%, the remainder being iron and impurities and residuals resulting from the production process, the steel having a substantially ferrito-perlitic structure, the ferrite fraction being at least 20%, the tensile strength of the steel being lower than 1100 MPa, the elastic limit being higher than 700 MPa, the Re/Rm ratio being higher than 0.73 and the Kcv impact strength being lower than 7 joules/cm$^2$.

2. Steel according to claim 1, **characterised in that** its chemical composition is such that:

$$P \leq 0.03\%.$$

3. Steel according to claim 1, **characterised in that** the residuals, which are constituted by nickel, chromium and molybdenum, have contents such that:

$$Ni + Cr \leq 0.45\%$$

$$Mo \leq 0.06\%.$$

4. Steel according to claim 1, 2 or 3, **characterised in that** the ferrite fraction is at least 30%.

5. Steel according to claim 1, 2, 3 or 4, **characterised in that** the Re/Rm ratio is higher than 0.75.

6. Steel according to any one of claims 1 to 5, **characterised in that** the tensile strength Rm is higher than or equal to 850 MPa.

7. Steel part according to any one of claims 1 to 6.

8. Part according to claim 7, **characterised in that** it is a connecting rod.

9. Process for the manufacture of a steel part comprising at least two separate portions, according to which:

   - there is heated to a temperature of between $Ac_3$ + 150°C and 1370°C a steel slug whose chemical composition comprises, by weight:

   $$0.2\% \leq C \leq 0.4\%$$

   $$0,1\% \leq Si \leq 1.5\%$$

   $$0.3\% \leq Mn \leq 1.4\%$$

   $$0.2\% \leq V \leq 0.5\%$$

   $$P \leq 0.150\%$$

   $$0.005\% \leq N \leq 0.02\%$$

   and optionally one or more elements selected from lead up to 0.1%, tellurium up to 0.15%, bismuth up to 0.15%, selenium up to 0.02%, sulphur up to 0,35% and calcium up to 0.005%, optionally at least one element selected from titanium up to 0.05%, niobium up to 0.1%, and aluminium up to 0.07%, the remainder being iron and impurities and residuals resulting from the production process,
   - the slug is forged in order to obtain a blank,
   - after forging, the blank is cooled to ambient temperature at a rate of between 0.4°C/s and 1.5°C/s at the point of passing through 700°C, in order to obtain a substantially ferrito-perlitic structure whose ferrite fraction is at least 20%, a tensile strength lower than 1100 MPa, an elastic limit higher than 700 MPa, a Re/Rm ratio higher than 0.73 and a Kcv impact strength lower than 7 joules/cm$^2$,
   - the blank is machined one or more times,
   - and the part obtained is separated into at least two portions by cleavage fracture.